# EUROPEAN PATENT APPLICATION

(11) **EP 1 466 809 A2**
(43) Date of publication of application: **13.10.2004**
(21) Application number: 04007596.2
(22) Date of filing: 30.03.2004
(51) Int. Cl.: B62B 5/06

(54) **Ergonomic handle for trolley**

(30) Priority: 07.04.2003 IT TV20030064
(71) Applicant: Moschini, Dino, 31056 Roncade (Treviso) (IT); Moschini, Francesco, 31056 Roncade (Treviso) (IT)
(72) Inventor: Moschini, Dino, 31056 Roncade (Treviso) (IT); Moschini, Francesco, 31056 Roncade (Treviso) (IT)

(57) **Abstract**

The subject of this application is an ergonomic handle for the rudder of the trolley, the trolley being, as well known, a traditional suit-case, or more in general a container, equipped with wheels, rudder and handle i.e. with three accessories which allow for an easy carrying of the suit-case or more in general of the container, as the weight is loaded on the wheels mainly and the rudder, single or multiple, extractable typically and provided with handle, allows for the pulling of the same trolley and the orientation of the direction. The main characteristic of the invention object of the present application is constituted by the shape and the functionality of the handle as ergonomic during the conditions of pulling of the trolley.

## Description

### TECHNICAL FIELD

The invention involves the field of the travelling luggage and involves the "trolleys" particularly, so used during the flight travels as particularly for such trips trolleys must have a lot of functions like, other than those summarised in the abstract, one or more of the following: the possibility of sliding under the front seat of the aircraft; double fixed handles for the easy transportability along the mobile stairs, the insertion on the luggage holders and other situations; the inclusion of external pockets for the collocation of typical travelling accessories like the mobile telephone, the agenda, the typical traveller's documents as the passport and the tickets; particular fittings for the fixing of further object like the personal computer or the 24 hours suitcase, etc..

### STATE OF THE ART AND RELATIVE PROBLEMS

Nowadays it is always more diffused the use of the luggage provided with wheels so that to reduce the fatigue of the traveller, especially during the flight trips which require that the same traveller take care of the luggage transferring all the same from the garage (or the taxi) to the check-in area and part of the luggage from the check-in area to the gate, to the aircraft and, once arrived to destination, from the aircraft to the luggage claim area for the collection of the taken on board luggage and from this area to the airport exit to take the taxi or other means of transportation and go to the hotel or to other destination. It has to be considered that the traveller other than the luggage constituted by the classic luggage / suit-case (nowadays mainly provided with wheels) has to bring with him also clothes like the overcoat or the mackintosh or other accessory and this independently from the season as generally the flight trip involves the change of geographic parallels so that the clothes' change is required already during the trip, before opening the luggage. The traveller therefore is exposed to continuous physical efforts (effort to transport the luggage), physiological efforts (climate and weather modifications, food habit modification, life habit modification, time zone change, etc.) and intellectual (care during different activities and operations connected with the trip). It is obvious therefore that reducing also only one of such efforts helps in supporting and solve the other efforts and consequently also the scope (mainly of business) of the travelling. The adding of the wheels to the luggage, both the hand luggage and the taken on board luggage is a big contribution to the improving of the conditions of the traveller, and this is a reality already obtained and improved during the years. Nevertheless it is known that also carrying the luggage with wheels requires a residual effort which, even if minimum, has a negative influence on the other functions. Particularly one problem is that coming from the non ergonomic position of the hand and therefore of the complete system arm / wrist / hand / fingers while in the condition of taking the handle, due to the fact that the handle has an orientation (in the state of the art) always parallel to the plane of the floor, as the axis of the handle is always parallel to the axis crossing the two wheels.

A further problem, belonging to the state of the art, is constituted by the fact that, due to the non ergonomic condition of the system arm / wrist / hand / fingers, the traveller finds as instinctive to change the condition how taking of the handle frequently, using now the orientation of the palm of the hand towards the floor (conditions statistically more frequent), now the orientation of the palm of the hand towards the sky, these operations requiring an extra activity, even if minor, anyhow disturbing. Moreover, for the same reason, the traveller has to change the hand used for the carrying of the trolley frequently.

Further problem, belonging to the state of the art, is constituted by the fact that, when executing such manoeuvres, sometimes the taking of the handle is lost with the consequence of the falling of the rudder and therefore of the complete trolley.

Further problem, belonging to the state of the art, is constituted by the fact that, if the non ergonomic position of the system arm / wrist / hand / fingers continues for time, what happens for the always more present so said "frequent flyer", the traveller assumes postures which are critical in respect to his general comfort.

The research of the similar prior art in the specific field found the more pertinent invention WO 02/085695 with application date 23.04.2002 and priority LE01U000004 dated 23.04.2001, applicant and inventor Nimis Giuseppe. Such invention refers to the same problem to reduce the fatigue in the managing of the wheeled luggage, but gives an only solution of conferring the direction during the carrying of the luggage but gives no contribution to the improving of the condition of the interface between traveller and luggage, inventing a product completely different from that object of the present application and anyhow having a poor practical use or at least a poor practical use in the major part of the situations to which the traveller is exposed. In fact the solution, even if inventive in se, and even if reducing the difficulty of orientation of the transport's direction by means of the rudder, nevertheless does not solve the problems completely, as not resulting ergonomic towards the following parts of the traveller's body: arm / wrist / hand / fingers. Moreover this solution introduces the following inconveniences: worsening of the anterior stability in case of single anterior wheel or insufficient contact with the floor in case of tern of anterior wheels, compromising the manoeuvrability and the stability; non negligible additional cost in comparison with that of the luggage or of the container; excessive weight; excessive cost.

Another similar prior art even if less pertinent is constituted by the invention WO 97/30607 with application date 24.02.1997 and priority GB 9603965.6 dated 24.02.1996 and GB 9621606.4 dated 16.10.1996, applicants Moveasy International Limited and Lowenstein and inventor Lowenstein. This invention regards the base configuration of the well known and always more diffused trolley, constituted by a rigid structural body on which the telescopic retractable rudder is inserted, this rudder terminating with a handle eventually retractable for a function of disappearance. A second telescopic retractable member can co-exist on the base of the trolley so that it can receive if useful a second baggage. Also this invention results non ergonomic towards the following parts of the traveller's body: arm / wrist / hand / fingers.

The research of prior art registered in similar fields or anyhow in pertinent fields did not discover similar inventions not even in the contiguous field of the packing and of the accessories for its functional transport like "transpallets", elevation trucks etc..

Such methods however do not teach anything about the solution to make the coupling with the hand of the traveller, or better with the members' group: arm / wrist / hand / fingers, ergonomic.

Main task of the object of the present application is therefore that of solving the listed technical problems, eliminating the inconveniencies of the disclosed known technique and therefore contriving a product able to reduce the trouble of the traveller caused by a non ergonomic position of the complex of the following members: arm / wrist / hand / fingers.

As well important is the task of actuating the above in a simple and therefore economic way so that to allow for a great circulation of the product. As well it is important that, at least in the major part of the solutions, the action of an only hand is sufficient to orientate the handle of the trolley according to an ergonomic condition.

### DESCRIPTION OF THE INVENTION

For a better understanding of the content and of the importance of the invention, user's exigencies have already been described and above all the universality and the actuality of the matter have been introduced but only as explication of the validity and the originality of the inventive step. Let we see now the content and how such a new principle and consequent product can be carried out, from the points of view technical, industrial and commercial.

The inventive step, simple but important as innovation, is that to hinge the handle, located at the top end of the rudder, according to an axis crossing the spherical fulcrum of the wrist or which coincides with the longitudinal axis laid along the arm's torsion axis.

As already anticipated it is important that the user has to carry out a simple, useful and quick operation, natural possibly, to orientate the handle in such a way that the same can assume / maintain / update an ergonomic position, and this either when the moving direction is modified, or when the layout of the palm of the hand is alternated, or when the pulling hand is alternated from right hand to left hand or vice-versa.

### WAYS TO EXECUTE THE INVENTION

For better understanding of the characteristics of the principle and the ways how to implement the invention, figures relative to some of the possible embodiments are hereafter disclosed, without excluding all the equivalences which are not exposed to avoid to complicate the essential description of the invention. For convenience and uniformity of treatment it is mainly disclosed the classic case of the trolley which constitutes the hand luggage of the flight traveller and some embodiments of the invention are described. Naturally the same concept is applicable to other types of luggage or containers in general used in all types of trip.

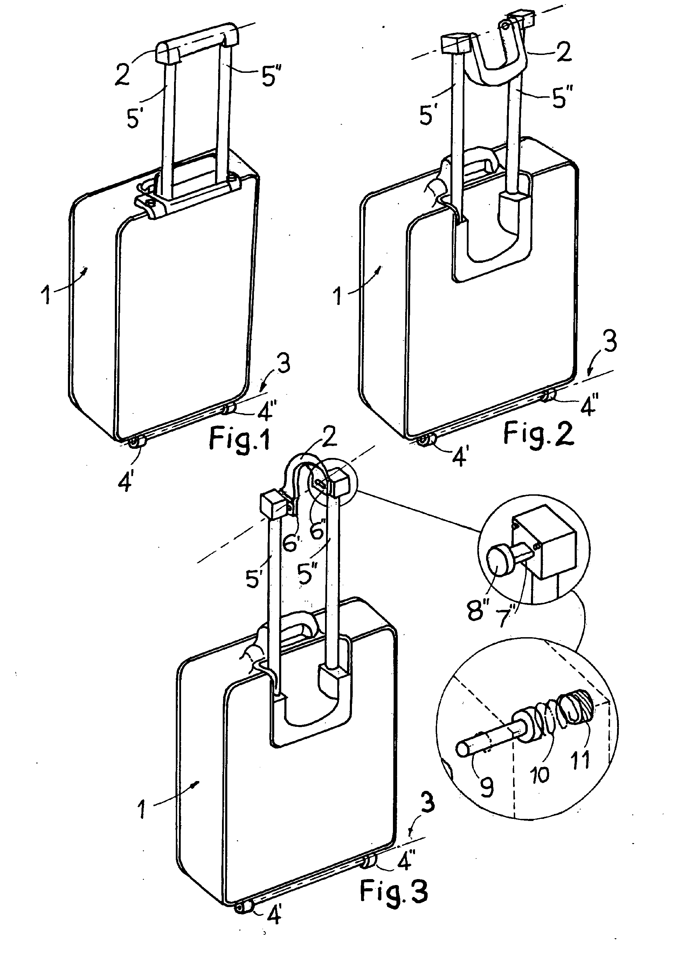

FIGURE 1 shows the trolley (1) of the state of the art, excluding the location of the rudder (5) constituted by the pipes (5' and 5"), and put in evidence how the handle (2), laying with the longitudinal development of the same parallel to the axis (3) crossing the two wheels (4 and 4'), imposes to the hand's hold a posture also with the main axis parallel to the same axis (3) and therefore also lying parallel to the plane of the floor, that is a posture non ergonomic, especially when the trolley is pulled. The rudder (5), constituted by the pipes (5' and 5"), is in this representation located eccentric in respect to the body of the suit-case, as it will be protected with a secondary claim.
FIGURE 2 shows the trolley (1) of the state of the art, as a variation in which the handle (2) being free to oscillate (pivot) along an axis parallel to its longitudinal development, can be easily contained in an alcove and therefore disappear within the encumbrance of the luggage. Also in this case the condition how the hand brings the handle is not ergonomic, in fact the oscillation allowed still maintains the axis of the hand parallel to the plane of the floor.
FIGURE 3 shows the main principle of the invention object of the present application, that is that disclosed in the claims 1 and 2: the handle (2) can easily pivot around an axis orthogonal in respect with its longitudinal development so that to allow the traveller to rotate the complex fingers / hand / wrist / arm according to an axis coincident with the longitudinal development of the same arm or crossing the spherical fulcrum of the wrist. This is obtained, for example as represented in the figure, making sliding the joint between the same handle (2) and the two pipes (5' and 5") by means of slotted plates (6' and 6") belonging to the handle, on such slotted plates the flattened studs (7' and 7") belonging to the pipes (5' and 5") interact (naturally the reciprocal location of the plates and studs is possible). Studs (7' and 7") end with small disks (8' and 8"), represented separately in the figure, for the keeping of the plates (6' and 6"). A multiplicity of pins (9) pushed by springs (10) fixed with screws (11), all located at the top end caps of the pipes (5' and 5"), keeps the plates (6' and 6") in the position of end of stroke. As it is notable, and as represented, the longitudinal axis of the handle's hold is not parallel to the axis (3) crossing the two wheels (4' and 4"), allowing as consequence the ergonomic condition for the handle of the hand. The represented condition is that corresponding to the hold carried out by the left hand with the palm oriented upwards. In this figure as well in the other figures, the extensibility of the rudder (5) is obtained by means of the pipes (5' and 5"), each one constituted by a pipe and a case located in the trolley or by more telescopic pipes and by a case located in the trolley.

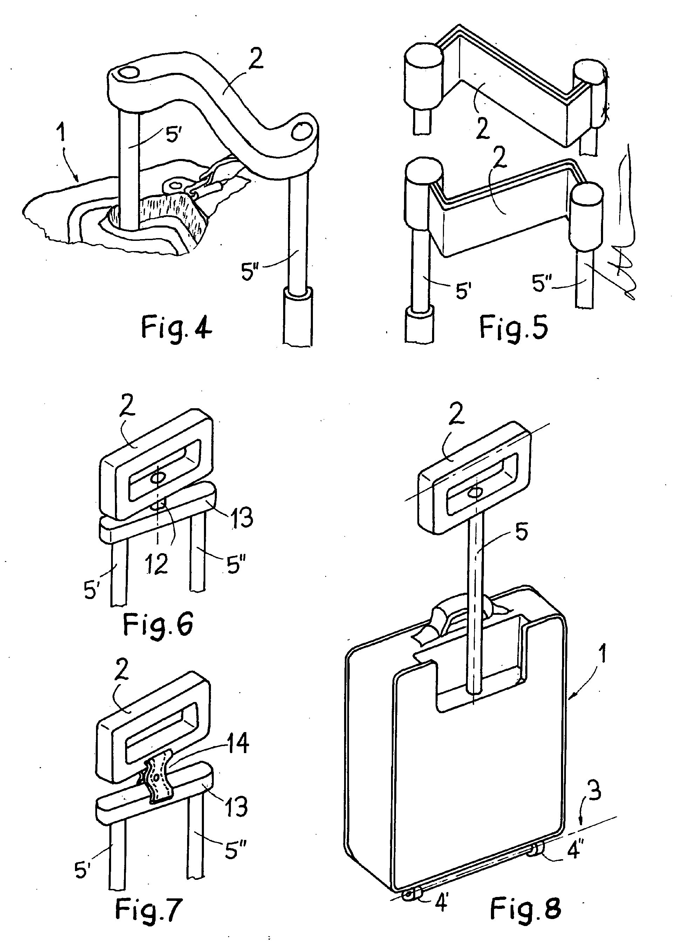

FIGURE 4 shows an embodiment where the orientation of the handle (2) is not registrable but fixed, but in such a way to be ergonomic or at least more ergonomic in respect to the orientation of the axis of the handle parallel to the plane of the floor i.e. the state of the art, as located according to an average orientation which is in accordance with the major part of the population of travellers. In the left side of the figure it is shown the condition near the case of the trolley, in the right side of the figure it 's shown the condition extended far from the case of the trolley.
FIGURE 5 shows a solution similar to that of the figure 3 but obtaining the ergonomic orientation by mean of the elastic deformability of the same handle, as for example constituted by a multiplicity of blades, elastic in the direction of the pivoting motion of the wrist, but rigid in the direction of pulling of the trolley. The figure represents the two conditions of disposition sinistrorse and of disposition dextrorse, with blades, for example made of leather, connected with caps, free for rotation, located at the top end of the telescopic pipes.
FIGURE 6 shows a solution similar to that of the figure 3, but reaching the ergonomic orientation by means of the hinge (12) located and operating between the inferior long side of the same handle (2), having shape of extended ring, and the bridge (13) which joins the pipes (5' and 5"). The hinge is constituted by a pivot (12) fixed to the bridge (13) around which the handle can pivot still remaining axially bound to avoid extraction. In the figure it is possible to observe the angle of incidence between the plane containing the handle and the plane containing the same rudder, difference which allows an incidence between the axis of the handle and the plane of the floor, according to the exigency requested by the natural posture of the hand of the traveller, during the pulling of the trolley.
FIGURE 7 shows a solution similar to that of the figure 3 but which gets the ergonomic orientation thanks to the shape of extended ring of the same handle, which inferior long side is hinged on the spherical joint (14) of the bridge (13) that joins the pipes (5' and 5"). An equivalent solution can be obtained with an handle made of soft material, for example leather or fibre, having the shape of a buckle, simply fastened in the middle of the bridge (13) which joins the pipes (5' and 5"). Also with this solution an incidence between the axis of the handle and the plane of the floor is allowed, according to the exigency requested by the natural posture of the hand of the traveller, during the pulling of the trolley.
FIGURE 8 shows a cheaper solution, but as well functional, as provided with an only telescopic rudder (5) on which the handle (2) interacts, the handle being simply hinged on the axis of the same rudder, in such a way to lie, by means of the action of the hand, according to an ergonomic orientation. Also here the incidence between the axis of the handle and the plane of the floor is visible, according to the exigency required by the natural posture of the hand of the traveller, during the pulling of the trolley.

Each FIGURE (describing the invention) corresponds to the claims 1 and 2, FIGURES 4 to 8 correspond to the claims 3 to 7.

Every solution of ergonomic handle as per various figures is suitable both to the "hand luggage" that the traveller brings with him in the aircraft, and to the more cumbersome and heavy luggage to be taken on board, luggage which anyhow before and after boarding has to be pulled by the traveller.
NOTE: due to reasons of synthesis, in the various descriptions products like luggage and container have been mentioned, the more exhaustive casuistry can be the following: luggage, suit-case, trolley, container, truck, etc..

The present invention is adaptable to numerous manufacturing variation all belonging to the protection of the inventive step, as for example the type of used material not limited to the plastics or to the leather or to the hides, the shape of the handle, the proportions of the components, etc.. As well the field of use can concern not only the field of the travelling bag but any field where the argument is to pull a truck used for the transport of materials.

### INDUSTRIAL USE

The product object of the present application if summarily evaluated looks like requiring additional operations in comparison with the state of the art, as common with the usual extractable handle but with orientation of the handle's axis parallel to the plane of the floor and non-modifiable, in reality it reveals to be very simple and easy in the use and with great advantage, at least in the various solutions as here behind described and in other which are equivalent, therefore it looks to be susceptible of important developments. As this argument involves those aspects of the daily life and of the quality of the same life, as the ergonomics is one of the aspects of the comfort and of the quality of the life, particularly today, as flight travels are very diffuse, it has such an importance so that a solution even if simple or banal, is destined to have such a diffusion to interest in a capillary and wide manner the complete world. Moreover a solution, once simple and banal, would not have limits of diffusion as the major cost of the modified element (type and functionality of the handle) should be so non-influent to allow to offer to the market the innovative product at the same price of the traditional product or at a minor price really, using the sale's increment and the production's increment consequently (particularly if the invention is protected by a patent right) to reduce the cost.

## Claims

1. Trolley (1) composed by a container provided with wheels (4' and 4"), rudder (5) fixed or extractable and handle (2), other than other typical accessories, ***characterised by** the fact that* the handle (2) has a pivoting angular orientation to adequate itself to the ergonomic condition of the complex arm / wrist / hand fingers of the user.

2. Handle (2) for trolley (1) as per claim 1 ***characterised by** the fact that* the pivoting angular orientation allowed to the hold of the handle (2) deviates the same from the stand by position in which the axis of the handle (2) is parallel to the plane of the floor.

3. Handle (2) for trolley (1) as per claim 1 ***characterised by** the fact that* the hold of the handle (2) has a fixed angular orientation, different, and anyway more ergonomic in respect to that for which the axis of the hold of the handle is parallel to the plane of the floor.

4. Handle (2) for trolley (1) as per claim 1 ***characterised by** the fact that* the handle (2) is made by a multiplicity of blades clipped to the pipes (5' and 5"), rigid along the pulling direction but flexible in the plane of articulation of the wrist, which therefore adapt themselves to the ergonomic condition required by the pulling hand.

5. Handle (2) for trolley (1) as per claim 1 ***characterised by** the fact that* the handle (2) is hinged on a central pivot (12), located on the bridge (13) joining the pipes (5' and 5"), which axis is orthogonal to the axis of the hold of the same handle (2).

6. Handle (2) for trolley (1) as per claim 1 ***characterised by** the fact that* the handle (2) is hinged on a spherical joint (14), located on the bridge (13) joining the pipes (5' and 5").

7. Handle (2) for trolley (1) as per claim 1 ***characterised by** the fact that* the ergonomic orientation of its hold is obtained thanks to the execution of the rudder (5) as single pipe , on which axis the hold of the handle (2) is hinged.

8. Handle (2) for trolley (1) as per claim 1 ***characterised by** the fact that* the ergonomic orientation of its hold is obtained thanks to the bending and torque elasticity of the pipes (5' and 5").

9. Handle (2) for trolley (1) as per one or more of the previous claims ***characterised by** the fact that* the ergonomic orientation of its hold is modifiable between the possible combinations of the conditions of hand's palm oriented downwards or upwards, of use of the right hand or of the left hand.

10. Handle (2) for trolley (1) as per one or more of the previous claims ***characterised by** the fact that* the same handle (2) is kept in the stand by position i.e. that one in which the axis of the handle's hold is parallel to the plane of the floor, or in the ergonomic position or in both positions, by means of one or more click pins (9) acting between the rudder's (5) structure or pipes' structure (5' and 5") and the same handle (2).

11. Trolley (1) as per one or more of the previous claims ***characterised by** the fact that* the pipes (5' and 5") of the rudder (5) are located in eccentric position in respect to the suit-case's body so that to allow that an important space of the same trolley is free from the encumbrance of the same rudders and of their housing shell and could therefore contain more encumbering objects.
